# EUROPEAN PATENT SPECIFICATION

(11) **EP 1 327 408 B1**
(45) Date of publication and mention of the grant of the patent: **22.12.2004**
(21) Application number: 03250122.3
(22) Date of filing: 09.01.2003
(51) Int. Cl.: A47J 36/02, A47J 37/10

(54) **Cookware with undulating cooking surface**
Kochgerät mit wellenförmigem Kochprofil
Dispositif de cuisson avec une surface de cuisson ondulée

(30) Priority: 10.01.2002 US 43814
(43) Date of publication of application: 16.07.2003
(73) Proprietor: MEYER MANUFACTURING CO., LTD, HONG KONG (HK)
(72) Inventor: Cheng, Stanley Kin- Sui, Kowloon.,Hong Kong (CN)
(74) Representative: Howe, Steven

(56) References cited:
- EP-A- 0 633 327
- EP-A- 0 668 041
- US-A- 4 533 807
- US-A- 4 768 427

## Description

### Baokground of the Invention

The present invention relates to an article of cookware having a non-stick cooking surface and which is shaped with a pattern of corrugations or undulations.

It is well-known to provide articles of cookware such as frying pans, saucepans and the like with a non-planar cooking surface. For example, articles such as cast iron griddles or grill pans have traditionally been provided with ribbed or uneven surfaces to maintain the food spaced from the main body of the griddle or pan to allow a grilling-type of cooking effect.

Since people first started using cookware articles a major concern has been to prevent the food being cooked from adhering to the cookware. One of the most important developments in this respect was the development of non-stick coatings, and in particular silicone based coatings which are now near ubiquitous, such as those based on polytetrafluoroethylene (PTFE). As well as providing a surface to which food does not readily adhere during cooking, such coated surfaces are very easy to clean.

More recently, articles of cookware have been provided which have both non-planar cooking surfaces and non-stick coatings.

For example, the applicants have previously manufactured cookware articles where the cooking surface is provided with a series of closely spaced corrugations having a non-stick coating applied thereto, as disclosed in their US Patent No. 4768427. The corrugations comprise sharp peaks and valleys therebetween at a pitch spacing of about 1-2mm, and depth of a similar magnitude. These have the effect that the contact between the food and the cooking surface is greatly reduced, for example to only about 15% of the overall surface area, reducing the tendency of the food to stick to the cooking surface. Moreover, continued use of the cookware results in wear at the peaks for example through the action of cooking implements and cleaning implements, but the major part of the surface which lies beneath the peaks remains unworn. The efficacy of such products is reflected in the significant commercial success which they have enjoyed.

Although highly successful, such products do require proper use, care and regular cleaning. If not properly cleaned food has a tendency to build up in the grooves of the cookware surface. Recently, with the advent of cookware made of hard-anodised aluminium which has a gray, very non-reflective porous surface giving an appearance somewhat akin to a traditional cast iron pan there has been a particular tendency for consumers to misuse such products by cleaning them in a manner similar to seasoning a cast iron pan, that is without water and detergent and simply wiping with a dry or oiled cloth or paper towel, which leads to eventual adherence of food in the grooves which eventually becomes burnt and difficult to remove.

The present invention is directed to providing a cooking surface which enjoys the benefits provided by the non-planar coated cooking surface and yet which is easier to clean and less susceptible to misuse.

### Summary of the Invention

The pitch spacing of corrugations as disclosed in applicant's US 4768427 was carefully selected to provide an appropriate degree of contact of food with the shaped cooking surface. The applicant has found that, surprisingly, excellent results are obtained if the spacing is increased to a value of about 2.5mm, which corresponds to a pitch (number per inch (2.54 cm)) of about 10, and the profile of the ridges and valleys carefully selected.

According to the present invention there is provided an article of cookware having a base with an upper cooking surface on which food to be cooked is placed, which surface is provided with a pattern of concentric corrugations in the form of ridges and grooves therebetween wherein the ridge to ridge spacing is in the range 2.3 mm to 2.8mm with the vertical distance from ridge top to groove bottom in the range 0.05 to 0.15mm.

Most preferably, the ridge to ridge spacing is about 2.5mm and the vertical distance of ridge top to groove bottom is about 0.1mm. This shallow groove arrangement is a major departure from the structure of applicant's prior cookware.

The applicant has thus identified a combination of spacing and depth of corrugations which is highly effective. It is found that if the pitch of corrugations is increased much beyond the 10 pitch arrangement the food has a greatly increased tendency to adhere within the troughs. If the spacing is decreased the amount of cookware surface contacting the food and more particularly cooking utensils such as spatulas and the like, and cleaning utensils is too great such that the coating becomes worn with use.

Preferably, the pitch of valleys or grooves is also the same, at a spacing of about 2.5mm, whereby there is a regular pattern of ridges and grooves, and with the pattern having a shallow smoothly curved profile free of sharp edges.

The selection of the small vertical distance of ridge top to groove bottom, and the smoothly curved profile shape is particularly important. If increased substantially food becomes more readily trapped with misuse and improper cleaning, whilst if reduced substantially, too great an amount of cooking surface contacts the food and contacts cooking and cleaning utensils and becomes liable to wear.

### Brief Description of the Drawings

An embodiment of the invention is now described, by way of example only, with reference to the following drawings in which:
Figure 1 shows a frying pan in accordance with an embodiment of the invention; and
Figure 2 is an enlarged view of the cooking surface profile in a radial direction.

### Detailed Description of the Preferred Embodiment

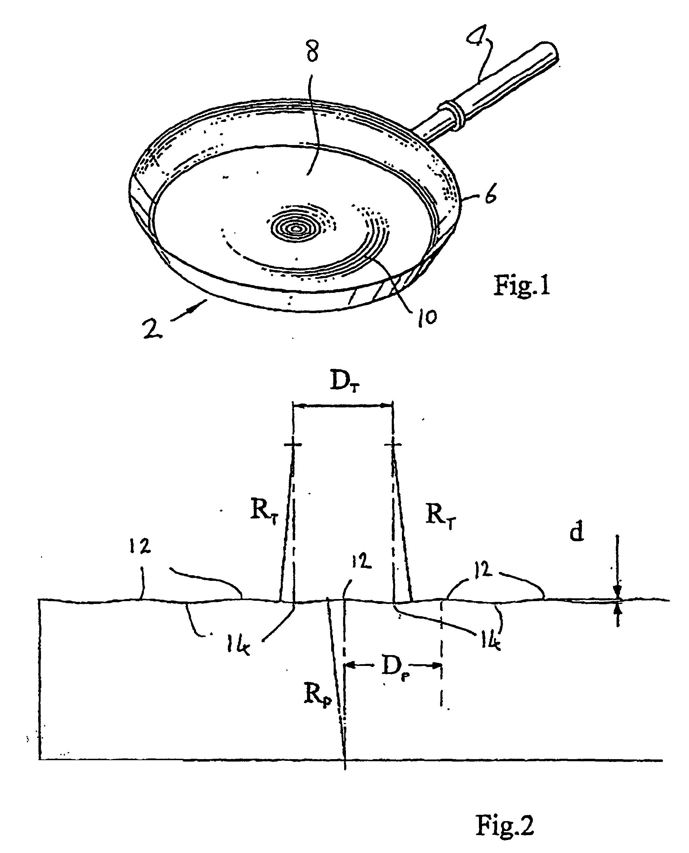

Turning to the Figures, Figure 1 shows an article of cookware in this case a frying pan 2 but which may equally be a saucepan, milk pan, stock pot, casserole, baking pan or tray, grill pan or any other cookware article having a cooking surface. The frying pan 2 has a handle 4 and a main body 6 having an upper food-receiving cooking surface 8 having a non-sticking coating applied thereto.

The cooking surface 8 is provided at least over a major part thereof with a pattern of concentric spaced corrugations or undulations 10 in the form of ridges and groves of which only a few are illustrated in Figure 1. Although a circular pattern is shown, other regular patterns can be utilised provided they are free of sharp corners or discontinuities at which food or oil would be liable to collect.

As can be seen more clearly in Figure 2 which shows a radial section with the corrugations expanded laterally on a scale of about 1 to 10, these comprise a series of adjacent ridges and grooves shown in profile as peaks 12 and shallow troughs 14 therebetween. More particularly, the peaks 12 are spaced a distance Dp apart where Dp is about 2.5mm, the troughs similarly spaced a distance D_{T} of 2.5mm apart. Thus, the pitch of peaks is about 10-pitch (ie 10 peaks to the inch (2.54 cm)). The vertical peak to trough distance d is about 0.1mm. The profile of the corrugations between peaks and troughs is of shallow smoothly curved shape free of sharp edges or discontinuities of shape with both peaks and troughs having radii of curvature R_{P} and R_{T} of about 4mm more particularly 4.06mm.

Although a small departure from the 10 pitch arrangement is tolerated it is found that if the pitch of corrugations 10 is increased beyond about 11 pitch (about 2.3mm) the food has a greatly increased tendency to adhere within the troughs. If the spacing is decreased from this to less than 9 pitch (about 2.8mm) the amount of cookware surface contacting the food and more particularly cooking utensils and cleaning utensils is too great such that the coating becomes significantly worn with use. The selection of the depth of the troughs or the peak to trough vertical distanced is also very important as if this is increased substantially from the value of 0.1mm much beyond 0.15mm food more readily becomes trapped with misuse, whilst it is decreased to less than about 0.05mm the cookware surface is not adequately protected by the peaks. Moreover, the smoothly undulating profile free of sharp edges is also important.

The pattern of corrugations 10 is preferably stamped into the pan body rather than being machined, as machining removes an amount of the base thickness. It is generally desired to maintain maximum thickness of the base for maintaining the good thermal properties of the base. Machining is also troublesome to perform as it produces a length of sharp scrap metal which must be disposed of. The non-stick coating is applied on top of the stamped pattern of corrugations, which is preferably a PTFE coating of a type employing a ceramic filler, such as the "Multiple reinforced technology" coatings of Dupont exhibiting superior durability as compared to traditional PTFE coatings. It is also found that the smoothly undulating profile of ridges and grooves is advantageous for the application of such ceramic filler-containing coatings. Prior shapes of ridges and grooves with sharp edges experience re-alignment of the fillers at the sharp edges of the peaks creating adhesion problems and reduced durability, as compared to the smooth shape of the present corrugations.

The pan 2 may be formed of or have a base formed of a variety of materials as is conventional such as stainless steel or aluminum. In the case of aluminum, hard-anodised aluminum is greatly preferred, as unanodised aluminum is relatively soft such that the pattern of corrugations as described above is then more susceptible to wear. In the case of stainless steel, before applying the non-stick coating the steel surface is arc-sprayed with small droplets of steel which bond to the surface creating a surface roughness to which the first coat of the non-stick coating, which is usually a mechanical bonding primer, can better adhere.

## Claims

1. An article of cookware (2) having a base with an upper cooking surface (8) on which food to be cooked is placed, which surface (8) is provided with a regular pattern of concentric corrugations (10) in the form of ridges and grooves (12, 14) therebetween **characterized in that** the ridge to ridge spacing (D_{P}) is in the range of 2.3mm to 2.8mm and the vertical distance of ridge top to groove bottom (d) is in the range 0.05mm to 0.15mm.

2. An article of cookware according to claim 1 wherein the ridge to ridge spacing (D_{P}) is about 2.5mm.

3. An article of cookware according to claim 1 or 2 wherein the vertical distance of ridge (12) top to groove (14) bottom (d) is about 0.1 mm.

4. An article of cookware according to claim 1, 2 or 3 wherein the groove to groove spacing (D_{T}) is about 2.5mm.

5. An article of cookware according to any preceding claim wherein the ridges (12) and grooves (14) have a shallow, curved profile free of sharp edges.

6. An article of cookware according to claim 5 wherein the curved profiles of the ridges and grooves have radii of curvature (R_{P}, R_{T}) of about 4mm.

7. An article of cookware according to any preceding claim wherein the corrugations (10) are formed in the base by stamping.

8. An article of cookware as defined in any preceding claim wherein at least the base is formed of hard-anodized aluminum.

9. An article of cookware as defined in any preceding claim wherein at least the base is formed of stainless steel having an upper cooking surface (8) to which is arc sprayed a surface layer of stainless steel onto which a non-stick coating is applied.

10. An article of cookware according to any preceding claim wherein the corrugations comprise concentric circles.

## Patentansprüche

1. Kochgerät (2) mit einem Boden mit einer oberen Kochfläche (8), auf der zu kochende Nahrungsmittel angeordnet werden, wobei die Fläche (8) mit einem gleichmäßigen Muster aus konzentrischen Wellen (10) in der Form von Rippen und dazwischen liegenden Nuten (12, 14) versehen ist, **dadurch gekennzeichnet, dass** der Abstand (D_{P}) von Rippe zu Rippe im Bereich von 2,3 mm bis 2,8 mm und der vertikale Abstand der Rippenspitze zum Nutenboden (d) im Bereich von 0,05 mm bis 0,15 mm liegt.

2. Kochgerät nach Anspruch 1, bei welchem der Abstand (D_{P}) von Rippe zu Rippe etwa 2,5 mm beträgt.

3. Kochgerät nach Anspruch 1 oder 2, bei welchem der vertikale Abstand (d) der Spitze der Rippe (12) zum Boden der Nut (14) etwa 0,1 mm beträgt.

4. Kochgerät nach Anspruch 1, 2 oder 3, bei welchem der Abstand (D_{T}) von Nut zu Nut etwa 2,3 mm beträgt.

5. Kochgerät nach einem vorangegangenen Anspruch, bei welchem die Rippen (12) und Nuten (14) ein flaches, gekrümmtes Profil frei von scharfen Kanten haben.

6. Kochgerät nach Anspruch 5, bei welchem das gekrümmte Profil der Rippen und Nuten Krümmungsradien (R_{P}, R_{T}) von etwa 4 mm besitzen.

7. Kochgerät nach einem vorangegangenen Anspruch, bei welchem die Wellen (10) im Boden durch Stanzen geformt sind.

8. Kochgerät nach einem vorrangegangenen Anspruch, bei welchem mindestens der Boden aus harteloxiertem Aluminium gebildet ist.

9. Kochgerät nach einem vorangegangenen Anspruch, bei welchem mindestens der Boden aus Edelstahl gebildet ist, auf dessen obere Kochfläche (8) eine Oberflächenschicht aus Edelstahl mittels Lichtbogen aufgeschmolzen ist, auf welcher eine nicht klebende Beschichtung aufgebracht ist.

10. Kochgerät nach einem vorangegangenen Anspruch, bei welchem die Welle konzentrische Kreise aufweisen.

## Revendications

1. Article de batterie de cuisine (2) doté d'une base avec une surface de cuisson supérieure (8) sur laquelle la nourriture à cuire est placée, cette surface (8) est dotée d'un modèle régulier d'ondulations concentriques (10) sous la forme de saillies et de rainures (12, 14) entre elles, **caractérisé en ce que** l'espace de saillie à saillie (D_{P}) est de l'ordre de 2,3 mm à 2,8 mm et la distance verticale du sommet de la saillie au fond de la rainure (d) est de l'ordre de 0,05 mm à 0,15 mm.

2. Article de batterie de cuisine selon la revendication 1, dans lequel l'espace de saillie à saillie (D_{P}) est d'environ 2,5 mm.

3. Article de batterie de cuisine selon la revendication 1 ou 2, dans lequel la distance verticale du sommet de la saillie (12) au fond (d) de la rainure (14) est d'environ 0,1 mm.

4. Article de batterie de cuisine selon la revendication 1, 2 ou 3, dans lequel l'espacement de rainure à rainure (D_{T}) est d'environ 2,5 mm.

5. Article de batterie de cuisine selon l'une quelconque des revendications précédentes, dans lequel les saillies (12) et les rainures (14) ont un profil incurvé peu profond dépourvu de bords tranchants.

6. Article de batterie de cuisine selon la revendication 5, dans lequel les profils incurvés des saillies et des rainures ont des rayons de courbure (R_{P}, R_{T}) d'environ 4 mm.

7. Article de batterie de cuisine selon l'une quelconque des revendications précédentes, dans lequel les ondulations (10) sont formées dans la base par estampage.

8. Article de batterie de cuisine selon l'une quelconque des revendications précédentes, dans lequel au moins la base est formée à partir d'aluminium dur anodisé.

9. Article de batterie de cuisine selon l'une quelconque des revendications précédentes, dans lequel au moins la base est formée à partir d'acier inoxydable comprenant une surface de cuisson supérieure (8) sur laquelle on pulvérise à l'arc une couche superficielle d'acier inoxydable sur laquelle on applique un revêtement antiadhésif.

10. Article de batterie de cuisine selon l'une quelconque des revendications précédentes, dans lequel les ondulations comprennent des cercles concentriques.
